(19) **Europäisches Patentamt**
**European Patent Office**
**Office européen des brevets**

(11) **EP 4 503 263 A1**

(12) **EUROPEAN PATENT APPLICATION**
published in accordance with Art. 153(4) EPC

(43) Date of publication:
05.02.2025 Bulletin 2025/06

(21) Application number: 23894987.9

(22) Date of filing: 21.11.2023

(51) International Patent Classification (IPC):
$H01M\ 10/54^{(2006.01)}$  $C22B\ 7/00^{(2006.01)}$
$C01G\ 53/00^{(2025.01)}$  $H01M\ 4/36^{(2006.01)}$
$H01M\ 4/525^{(2010.01)}$  $H01M\ 4/505^{(2010.01)}$
$H01M\ 4/62^{(2006.01)}$  $H01M\ 10/052^{(2010.01)}$
$H01M\ 4/02^{(2006.01)}$

(52) Cooperative Patent Classification (CPC):
C01G 53/00; C22B 7/00; H01M 4/02; H01M 4/36;
H01M 4/505; H01M 4/525; H01M 4/62;
H01M 10/052; H01M 10/54; Y02W 30/84

(86) International application number:
PCT/KR2023/018746

(87) International publication number:
WO 2024/112059 (30.05.2024 Gazette 2024/22)

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: 23.11.2022 KR 20220158164

(71) Applicant: **LG Energy Solution, Ltd.**
**Seoul 07335 (KR)**

(72) Inventors:
• **PARK, Se Ho**
**Daejeon 34122 (KR)**

• **KWON, Ohsung**
**Daejeon 34122 (KR)**
• **SEO, Yongsik**
**Daejeon 34122 (KR)**
• **YANG, Doo Kyung**
**Daejeon 34122 (KR)**
• **LEE, Jeongbae**
**Daejeon 34122 (KR)**

(74) Representative: **Hoffmann Eitle**
**Patent- und Rechtsanwälte PartmbB**
**Arabellastraße 30**
**81925 München (DE)**

(54) **METHOD FOR RECYCLING POSITIVE ELECTRODE ACTIVE MATERIAL AND POSITIVE ELECTRODE ACTIVE MATERIAL RECYCLED THEREFROM**

(57) The present invention relates to a method of recycling a cathode active material and a recycled cathode active material prepared using the method. More particularly, the present invention relates to a method of recycling a cathode active material, the method including step (a) of recovering a cathode active material by heat-treating a waste cathode including a current collector and a cathode active material layer coated thereon at 300 to 650 °C under an air or oxygen atmosphere; step (b) of mixing the recovered cathode active material and a washing solution; step (c) of filtering the cathode active material mixed with the washing solution; and step (d) of adding a lithium precursor to the filtered cathode active material and performing annealing at 400 to 1000 °C in air, wherein, in step (c), the filtered cathode active material has a moisture content of 5 to 10.5 % by weight, and a recycled cathode active material prepared using the method.

According to the present invention, the present invention has an effect of providing a method of recycling a cathode active material, the method being capable of minimizing the residual amount of fluorine (F) and greatly improving the capacity characteristics of a secondary battery by adjusting the moisture content of a cathode active material immediately before an annealing step within a predetermined range; being environmentally friendly; being capable of preventing generation of toxic gases or explosion by not using organic solvents; and being capable of greatly improving economics and productivity and a recycled cathode active material prepared using the method and having excellent electrochemical performance, resistance characteristics, and capacity characteristics.

[FIG. 4]

## Description

[Technical Field]

[Cross-Reference to Related Application]

This application claims priority to Korean Patent Application No. 10-2022-0158164, filed on November 23, 2022, in the Korean Intellectual Property Office, the disclosure of which is incorporated herein by reference.

The present invention relates to a method of recycling a cathode active material and a recycled cathode active material prepared using the method. More particularly, the present invention relates to a method of recycling a cathode active material, the method being capable of minimizing the residual amount of fluorine (F) and improving the capacity characteristics of a secondary battery by adjusting the moisture content of a cathode active material immediately before an annealing step within a predetermined range; being environmentally friendly; being capable of preventing generation of toxic gases or explosion; and being capable of greatly improving economics and productivity and a recycled cathode active material prepared using the method and having excellent electrochemical performance, resistance characteristics, and capacity characteristics.

[Background Art]

In general, a lithium secondary battery consists of a cathode formed by coating a metal foil, such as aluminum, with a cathode active material layer; an anode formed by coating a metal foil, such as copper, with an anode active material layer; a separator for preventing mixing of the cathode and anode; and an electrolyte solution that allows lithium ions to move between the cathode and anode.

In the cathode active material layer, a lithium-based oxide is mainly used as an active material. In the anode active material layer, a carbon material is mainly used as an active material. In general, the lithium-based oxide contains a rare metal such as cobalt, nickel, or manganese. Accordingly, studies on recovery and recycling of rare metals from the cathodes of lithium secondary batteries that are discarded after use or cathode scraps (hereinafter referred to as "waste cathodes") generated when manufacturing lithium secondary batteries are being actively conducted.

According to the related arts for recovering rare metals from a waste cathode, after dissolving a waste cathode using hydrochloric acid, sulfuric acid, or nitric acid, rare metals such as cobalt, manganese, and nickel are extracted using an organic solvent, and then the extracted metals are used as raw materials for synthesizing a cathode active material.

However, in the case of the method of extracting rare metals using an acid, a neutralization process and a wastewater treatment process are necessary due to environmental pollution problems, which greatly increases process costs. In addition, lithium, which is the main metal of a cathode active material, cannot be recovered by the above method.

To solve these drawbacks, methods (direct recycling methods) of directly recycling a cathode active material from a waste cathode without decomposing the cathode active material are being studied. As such methods, there are mainly four methods such as calcination, solvent dissolution, aluminum (Al) foil dissolution, and crushing & screening.

The calcination method can be performed in a simple process, but has disadvantages such as formation of foreign substances on the surface of a recycled cathode active material, which degrades the rate performance of a battery. In addition to the above disadvantages, waste gas is generated, and energy consumption is excessive.

In addition, when using the solvent dissolution method, a recycled cathode active material having a relatively clean surface may be obtained. However, since a solvent such as N-methyl-2-pyrrolidone (NMP) used to dissolve a binder is a toxic gas and has an explosion hazard, the method has poor stability and requires an expensive solvent recovery process.

In addition, in the case of the aluminum foil dissolution method, process stability is good, process cost is low, and binder removal is easy. However, foreign substances that are difficult to remove are formed on the surface of a recycled cathode active material, and there is a risk of explosion due to hydrogen gas generated in a process of removing aluminum foil.

In addition, the crushing & screening method can be performed through the simplest process among the above methods. However, it is difficult to completely separate a current collector and a cathode active material, the particle size distribution of the cathode active material is changed during a crushing process, and the battery characteristics of the recycled cathode active material are degraded due to a residual binder.

Therefore, there is an urgent need to develop a method of safely recycling a cathode active material having improved battery performance in an environmentally friendly manner at a low cost through a simple process without loss of metal elements from a waste cathode.

[Disclosure]

[Technical Problem]

Therefore, the present invention has been made in view of the above problems, and it is one object of the present invention to provide a method of recycling a cathode active material, the method being capable of minimizing the residual amount of fluorine (F) and improving the capacity characteristics of a secondary battery by adjusting the moisture content of a cathode active material immediately before an annealing step within a predetermined range; being environmentally friendly; being capable of preventing generation of toxic gases or explosion; and being suitable for mass production by using an easy-to-manage process such as heat treatment or precipitation.

It is another object of the present invention to provide a cathode active material having excellent electrochemical performance, resistance characteristics, and capacity characteristics.

It is yet another object of the present invention to provide a secondary battery having excellent electrochemical performance, resistance characteristics, and capacity characteristics.

The above and other objects can be accomplished by the present invention described below.

[Technical Solution]

I) In accordance with one aspect of the present invention, provided is a method of recycling a cathode active material, the method including (a) recovering a cathode active material by heat-treating a waste cathode including a current collector and a cathode active material layer coated thereon at 300 to 650 °C under an air or oxygen atmosphere; (b) mixing the recovered cathode active material and a washing solution; (c) filtering the cathode active material mixed with the washing solution; and (d) adding a lithium precursor to the filtered cathode active material and performing annealing at 400 to 1000 °C in air, wherein, in step (c), the filtered cathode active material has a moisture content of 5 to 10.5 % by weight as calculated by Equation 1 below.

[Equation 1]

$$\text{Moisture content (wt\%)} = [(A - B) / A] \times 100,$$

wherein A represents a weight (g) of the filtered cathode active material, and B represents a weight (g) of the filtered cathode active material after vacuum drying at 100 °C for 12 hours.

II) According to I), the cathode active material layer may include one or more selected from the group consisting of a lithium nickel oxide (LNO)-based cathode active material, a nickel·cobalt·manganese (NCM)-based cathode active material, a nickel·cobalt·aluminum (NCA)-based cathode active material, and a nickel·cobalt·manganese·aluminum (NCMA)-based cathode active material.

III) According to I) or II), in step (b), the washing solution may be water or a basic aqueous lithium compound solution.

IV) According to I) to III), the basic aqueous lithium compound solution may include a lithium compound in an amount of greater than 0 % by weight and 15 % by weight or less.

V) According to I) to IV), in step (c), the filtration may be performed using a belt press, a filter press, a screw press, a screw decanter, or a centrifuge.

VI) According to I) to V), in step (c), the filtration may be performed for 3 to 14 minutes.

VII) According to I) to VI), in step (c), the filtered cathode active material may be in a form of a cake.

VIII) According to I) to VII), in step (c), the filtered cathode active material may have an F content of 405 ppm or less.

IX) According to I) to VIII), in step (d), the lithium precursor may include one or more selected from the group consisting of $LiOH$, $Li_2CO_3$, $LiNO_3$, and $Li_2O$.

X) According to I) to IX), based on 100 mol% in total of lithium included in the cathode active material of step (a), the lithium precursor may be added in an amount corresponding to 1 mol% to 40 mol%.

XI) According to I) to X), the method of recycling a cathode active material may include obtaining a reusable cathode active material by coating a surface of the annealed cathode active material with a coating agent.

XII) According to I) to XI), the coating may be performed by coating the surface with one or more of metals, organic metals, and carbon components in a solid or liquid form and heating the surface at 100 to 1200 °C.

XIII) In accordance with another aspect of the present invention, provided is a recycled cathode active material prepared using the method according to I) to XII).

XIV) In accordance with still another aspect of the present invention, provided is a recycled cathode active material including one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide and having a fluorine (F) content of 405 ppm or less.

XV) According to XIV), a surface of the recycled cathode active material may be coated with a coating agent containing a metal or carbon.

XVI) In accordance with yet another aspect of the present invention, provided is a secondary battery including the recycled cathode active material according to XIV) or XV).

[Advantageous Effects]

According to the present invention, the present invention has an effect of providing a method of recycling a cathode active material, the method being capable of minimizing the residual amount of fluorine (F) and greatly improving the capacity characteristics of a secondary battery by adjusting the moisture content of a cathode active material immediately before an annealing step within a predetermined range; being environmentally friendly; being capable of reducing process costs; being capable of preventing loss of metal elements by recycling a cathode active material in an intact state without decomposing the cathode active material; being capable of recovering a current collector by not dissolving the current collector; being capable of preventing generation of toxic gases or explosion by not using organic solvents; being suitable for mass production by using an easy-to-manage process such as heat treatment or precipitation and a recycled cathode active material prepared using the method and having excellent electrochemical performance, resistance characteristics, and capacity characteristics.

[Description of Drawings]

The following drawings attached to this specification illustrate embodiments of the present invention, and are presented to further understand the technical idea of the present invention in combination with the detailed description described below. Accordingly, the present invention is not limited to these drawings.

FIG. 1 is a graph showing moisture contents depending on filtration times (5 minutes, 10 minutes, and 20 minutes) when a cathode active material mixed with a washing solution is filtered using a filter press.

FIG. 2 is a graph showing moisture contents depending on input amounts when a cathode active material mixed with a washing solution is filtered for 5 minutes using a filter press.

FIG. 3 is a graph showing moisture contents and residual F contents depending on filtration times (1 minute, 2 minutes, 5 minutes, 8 minutes, 10 minutes, 20 minutes, and 30 minutes) when a cathode active material mixed with a washing solution is filtered using a filter press.

FIG. 4 shows an image of a cathode active material filtered and dried to have a moisture content of 17.6 % by weight according to Comparative Example 2.

FIG. 5 includes SEM images (left side) of cathode active materials dried after filtration and EDS mapping images (right side) for F component. Here, the images at the top correspond to Comparative Example 1, and the images at the bottom correspond to Comparative Example 2.

FIG. 6 includes images of cathode active materials obtained after filtration in Example 1 and Comparative Example 2.

FIG. 7 is a graph showing the capacity maintenance rates of mono cells manufactured using the recycled cathode active materials prepared in Example 1 and Comparative Example 2.

FIG. 8 is a flowchart for explaining a process for recycling a cathode active material according to the present invention.

[Best Mode]

The present inventors confirmed that, while researching a direct recycling method to obtain a recycled cathode active material having excellent battery performance by directly recycling a cathode active material from a waste cathode without decomposing the cathode active material, when a cathode active material recovered by heat-treating waste cathodes was mixed with a washing solution, filtered, and annealed, when the cathode active material immediately before the annealing step was adjusted to have a predetermined moisture content, the battery characteristics of a recycled cathode active material were further improved. Based on these results, the present inventors conducted further studies to complete the present invention.

Hereinafter, a method of recycling a cathode active material according to the present invention and a recycled cathode active material prepared using the method will be described in detail.

The terms and words which are used in the present specification and the appended claims should not be construed as being confined to common meanings or dictionary meanings but should be construed as having meanings and concepts matching the technical spirit of the present invention in order to describe the present invention in the best fashion. In addition, since the configurations shown in the examples and drawings of this specification are only embodiments of the present invention, and do not represent all the technical spirit of the present invention, it should be understood that there are many equivalents and variations that may be substituted for the above configurations, and that the present invention may be arranged, substituted, combined, separated, or designed in various other configurations.

Unless otherwise defined, all technical and scientific terms used in this description have the same meaning as commonly understood by those of ordinary skill in the art to which the present invention pertains.

### Method of recycling cathode active material

A method of recycling a cathode active material according to the present invention includes step (a) of recovering a cathode active material by heat-treating a waste cathode including a current collector and a cathode active material layer coated thereon at 300 to 650 °C under an air or oxygen atmosphere; step (b) of mixing the recovered cathode active material and a washing solution; step (c) of filtering the cathode active material mixed with the washing solution; and step (d) of adding a lithium precursor to the filtered cathode active material and performing annealing at 400 to 1000 °C in air, wherein, in step (c), the filtered cathode active material has a moisture content of 5 to 10.5 % by weight as calculated by Equation 1 below. In this case, the amount of fluorine (F) remaining on the surface of the recycled cathode active material may be minimized, and a cathode active material capable of imparting excellent capacity characteristics to a secondary battery may be provided. In addition, the method may be environmentally friendly, may prevent generation of toxic gases or explosion by not using organic solvents, and may greatly improve economics and productivity.

$$[\text{Equation } 1]$$

$$\text{Moisture content (wt\%)} = [(A - B) / A] \times 100$$

In Equation 1, A represents the weight (g) of the filtered cathode active material, and B represents the weight (g) of the filtered cathode active material after vacuum drying at 100 °C for 12 hours.

Hereinafter, each step of the method of recycling a cathode active material will be described in detail.

### (a) Recovering cathode active material from waste cathode

Step (a) of recovering a cathode active material from a waste cathode according to the present invention may be preferably a step of heating a waste cathode including a current collector and a cathode active material layer coated thereon at 300 to 650 °C under an air or oxygen atmosphere to recover a cathode active material. In this case, a simple process may be implemented, and a binder, a conductive material, and a current collector may be completely removed.

The waste cathode may be preferably a cathode separated from a lithium secondary battery discarded after use, or a defective cathode sheet or a cathode scrap generated in a process of manufacturing a lithium secondary battery, more preferably a cathode scrap remaining after blanking a cathode sheet to obtain a cathode plate.

The cathode active material layer of step (a) may preferably include a cathode active material, a binder, and a conductive material.

For example, the cathode active material may include one or more selected from the group consisting of a lithium nickel oxide (LNO)-based cathode active material, a nickel·cobalt·manganese (NCM)-based cathode active material, a nickel·cobalt·aluminum (NCA)-based cathode active material, and a nickel·cobalt·manganese·aluminum (NCMA)-based cathode active material.

The cathode active material may include preferably one or more selected from the group consisting of a lithium cobalt oxide such as $LiCoO_2$ (hereinafter referred to as "LCO"); a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. More preferably, the cathode active material may be a nickel manganese-based lithium composite metal oxide, an NCM-based lithium composite transition metal oxide, or a mixture thereof. In this case, reversible capacity and thermal stability may be excellent.

As another specific example, the cathode active material may be a compound represented by Chemical Formula 1 below.

[Chemical Formula 1]         $Li_aNi_xMn_yCo_zM_wO_{2+\delta}$

In Chemical Formula 1, M includes one or more selected from the group consisting of B, W, Al, Ti, and Mg, $1 < a \leq 1.1$, $0 < x < 0.95$, $0 < y < 0.8$, $0 < z < 1.0$, $0 \leq w \leq 0.1$, $-0.02 \leq \delta \leq 0.02$, and $x+y+z+w=1$.

For example, the conductive material may be a carbon-based conductive material, preferably carbon black, CNT, or a mixture thereof.

For example, the binder may be a polymer binder, preferably polyvinylidene fluoride (PVdF), acrylonitrile-butadiene rubber (NBR), or a mixture thereof, more preferably polyvinylidene fluoride.

For example, the heat treatment may be performed under an air atmosphere or under an oxygen atmosphere, preferably under an air atmosphere. In this case, since the binder and the carbon components in the conductive material react with oxygen to generate gases such as CO and $CO_2$ and then disappear, the binder and the conductive material may be completely removed.

For example, the oxygen may have a purity of 59 % or more, preferably 80 % or more, more preferably 90 % or more, still more preferably 90 to 99 %. Within this range, the binder and the conductive material may be completely removed, the stability of Ni in the active material may be increased, and a crystal size may be reduced.

The purity (%) of the oxygen may be expressed as volume% or mol%.

The purity of oxygen in the present invention may be measured without particular limitations using measurement methods commonly used in the technical field to which the present invention pertains.

The heat treatment temperature may be preferably 400 to 600 °C, more preferably 500 to 600 °C, still more preferably 530 to 580 °C. Within this range, since a current collector is not melted and only a binder is removed, a cathode active material may be easily separated from the current collector.

The heat treatment time may be preferably 10 minutes to 5 hours, more preferably 30 minutes to 5 hours, still more preferably 30 minutes to 2 hours, still more preferably 30 minutes to 1 hour. Within this range, since a current collector is not melted and only a binder is removed, a cathode active material may be easily separated from the current collector.

In the present disclosure, the heat treatment time is time of heat treatment performed at the corresponding heat treatment temperature, and does not include time required to reach the corresponding heat treatment temperature.

**(b) Mixing recovered cathode active material and washing solution**

The method of recycling a cathode active material of the present invention includes step (b) of mixing the recovered cathode active material and a washing solution. In this case, metal fluorides such as LiF remaining on the surface of the recycled cathode active material may be removed, and surface modification may be achieved.

During the heat treatment, $CO_2$ and $H_2O$ in the binder and conductive material in the active material may react with lithium on the surface of the cathode active material to form $Li_2CO_3$ and LiOH. Fluorine (F) present in a binder such as PVdF may react with metal elements constituting the cathode active material to form LiF or metal fluorides. When LiF or metal fluorides remain, the battery characteristics deteriorate when the active material is reused.

For example, as the washing solution, water or a basic aqueous lithium compound solution may be used. More preferably, a basic aqueous lithium compound solution may be used as the washing solution. In this case, metal fluorides such as LiF remaining on the surface of the cathode active material may be removed, and an excellent surface modification effect may be obtained.

The water may be preferably distilled water or deionized water, more preferably distilled water. In this case, metal fluorides such as LiF remaining on the surface of the cathode active material may be removed, and an excellent surface modification effect may be obtained.

The basic aqueous lithium compound solution may include a lithium compound in an amount of preferably greater than 0 % by weight and 15 % by weight or less, more preferably greater than 0 % by weight and 10 % by weight or less. In this case, metal fluorides such as LiF remaining on the surface of the cathode active material may be removed, and the surface may be modified. In addition, elution of transition metals present in the cathode active material may be prevented, and lithium that may be eluted during the washing process may be supplemented. When the lithium compound is included in an amount exceeding the range, an excess of LiOH may remain on the surface of the active material even after washing, which may affect the subsequent annealing process.

For example, the lithium compound may be LiOH, $LiNO_3$, or a mixture thereof, preferably LiOH. In this case, fluorine (F) on the surface of the cathode active material and a lithium precursor not used in the reaction may be removed.

For example, in the mixing, the weight ratio of the recovered cathode active material to the washing solution may be 1:1 to 1:40, preferably 1:1 to 1:35, more preferably 1:1 to 1:30. Within this range, metal fluorides such as LiF may be efficiently removed.

For example, the mixing may be performed by immersing the recovered cathode active material in the washing solution. For example, the immersing may be performed for a week, preferably within a day, more preferably within 1 hour, still more preferably for 5 minutes to 50 minutes, still more preferably 10 minutes to 40 minutes. When the immersing is performed for more than a week, capacity may decrease due to excessive elution of lithium.

Preferably, the mixing may be performed by stirring while immersing the cathode active material in the washing solution. In this case, as the mixing process is performed quickly, elution of lithium may be suppressed and process hours are reduced.

### (c) Filtering cathode active material mixed with washing solution

The method of recycling a cathode active material according to the present invention includes step (c) of filtering the cathode active material mixed with the washing solution. In this case, metal fluorides such as LiF may be removed more effectively.

For example, the filtration may be performed using a belt press, a filter press, a screw press, a screw decanter, or a centrifuge, preferably a filter press. In this case, metal fluorides such as LiF may be removed more effectively.

A filter press commonly used for filtration in the technical field to which the present invention pertains may be used in the present invention without particular limitation.

For example, the filtration may be performed for 3 to 14 minutes, preferably 3 to 11 minutes, more preferably 4 to 8 minutes. Within this range, moisture may be efficiently removed, and the content of metal fluorides such as LiF may be greatly reduced. When the filtration time is less than the range, the moisture content may be high because the washing solution is not sufficiently removed. When the filtration time exceeds the range, the moisture content may increase somewhat, the content of metal fluorides such as LiF may not decrease, and energy consumption may increase.

For example, when performing the filtration, the input amount per time may be 2 to 3.1 kg, preferably 2.5 to 3.1 kg, more preferably 2.7 to 3.0 kg. Within this range, the washing solution may be efficiently removed, and the content of metal fluorides such as LiF may be reduced.

For example, in step (c), the filtered cathode active material may have a moisture content of 5 to 10.5 % by weight, preferably 5 to 8 % by weight, more preferably 5 to 7 % by weight as calculated by Equation 1 below. Within this range, metal fluorides such as LiF remaining in the recycled cathode active material may be removed more effectively, process costs may be reduced, and the capacity characteristics of a battery may be excellent. In addition, even when the filtration time is increased to reduce the moisture content below the above range, moisture content may not be reduced, there may be no change in the residual amount of metal fluorides such as LiF, and a lot of energy and time are consumed.

[Equation 1]

$$\text{Moisture content (wt\%)} = [(A - B) \, / \, A] \times 100$$

In Equation 1, A represents the weight (g) of the filtered cathode active material, and B represents the weight (g) of the filtered cathode active material after vacuum drying at 100 °C for 12 hours.

For example, in step (c), the filtered cathode active material may be in the form of a cake. In this case, the residual amount of metal fluorides, such as LiF, and drying time may be reduced. When the moisture content exceeds the range, the cathode active material may be in a slurry state. In this case, the residual amount of metal fluorides, such as LiF, and drying time may be increased. As a result, lithium may be eluted from the cathode active material.

For example, in step (c), the filtered cathode active material may have an F content of 405 ppm or less, preferably 1 to 405 ppm. Within this range, the capacity characteristics of a secondary battery may be improved.

In the present disclosure, the fluorine (F) content may be measured using an ICP analysis device. At this time, ICP analysis devices commonly used in laboratories may be used, but there is no difference depending on the measurement devices or methods.

In addition, in the present disclosure, unless otherwise defined, ppm is by weight.

In step (c), preferably, a process of drying the filtered cathode active material may be included. In this case, the crystal structure may be effectively recovered in the subsequent annealing step.

The drying may preferably be vacuum drying. As a specific example, the drying may be performed under vacuum at preferably 70 to 200 °C, more preferably 80 to 130 °C for 1 to 24 hours until there is no further change in weight. Within this range, moisture contained in the washed cathode active material may be efficiently removed.

Vacuum drying methods commonly used in the technical field to which the present invention pertains may be used in the present invention without particular limitation. For example, the vacuum drying may include drying under partial vacuum or low pressure.

**(d) Adding lithium precursor to filtered cathode active material and performing annealing**

The method of recycling a cathode active material of the present invention includes step (d) of adding a lithium precursor to the filtered cathode active material and performing annealing. In this case, the crystal structure of the recycled cathode active material may be restored or improved to a level similar to that of a fresh cathode active material.

Annealing step (d) may be a step of adding a lithium precursor to the filtered cathode active material having a moisture content of 5 to 10.5 wt% and performing annealing at 400 to 1000 °C under an air or oxygen atmosphere, preferably under an air atmosphere. In this case, by improving crystallinity through an increase in crystallinity or recovery of a crystal structure, the battery characteristics of a recycled cathode active material may be improved.

For example, the annealing time may be 1 to 15 hours, preferably 2 to 10 hours, more preferably 3 to 8 hours, still more preferably 4 to 6 hours. Within this range, the crystallinity of the recycled cathode active material may be further increased, thereby improving the battery characteristics of the recycled cathode active material.

The annealing temperature may be reached at a heating rate of preferably 1 to 10 °C/min, more preferably 1 to 5 °C/min. In this case, the crystallinity of the recycled cathode active material may be further increased, thereby improving the battery characteristics of the recycled cathode active material.

For example, the annealing step may include a cooling process. As a specific example, the cooling process may be performed through natural cooling within a furnace. In this case, the crystallinity of the recycled cathode active material may be further increased, thereby improving the battery characteristics of the recycled cathode active material.

In the present disclosure, annealing may follow the definition used in the technical field to which the present invention pertains. As a specific example, annealing may be defined as a heat treatment operation that heals deformation or lattice defects and increases crystallinity by heating a cathode active material with a deformed structure or lattice defects for an appropriate period of time at a temperature, i.e., a temperature above a recrystallization temperature, that allows the atoms of main components in the cathode active material to sufficiently diffuse and move.

The lithium precursor may preferably include one or more selected from the group consisting of $LiOH$, $Li_2CO_3$, $LiNO_3$, and $Li_2O$.

The lithium precursor may be preferably added in an amount corresponding to the reduced amount of lithium based on an amount of lithium in the cathode active material of step (c) based on the amount of lithium in the cathode active material as a raw material or the recovered cathode active material. More preferably, the lithium precursor may be added in an amount corresponding to a molar ratio of lithium of 0.0001 to 0.2, still more preferably 0.001 to 0.2, still more preferably 0.01 to 0.17, still more preferably 0.1 to 0.17, still more preferably 0.12 to 0.17 based on the molar ratio of lithium in the cathode active material of step (a). Within this range, by supplementing lithium in the recycled cathode active material, crystallinity may be increased, or a crystal structure may be recovered, thereby improving crystallinity. Thus, the battery characteristics of the recycled cathode active material may be improved.

The lithium precursor may be added in an amount corresponding to preferably 1 to 40 mol%, more preferably 1 to 25 mol%, still more preferably 1 to 15 mol%, still more preferably 3 to 15 mol% based on 100 mol% in total of lithium contained in the recovered cathode active material. Within this range, since there is no residual precursor that causes an increase in the resistance of the recycled cathode active material, battery characteristics may be improved.

The annealing temperature may be adjusted within a limited range according to the melting point of the lithium precursor. For example, in the case of $LiCO_3$ as the lithium precursor, the melting point thereof is 723 °C, and thus annealing may be performed at preferably 700 to 900 °C, more preferably 710 to 780 °C. In the case of $LiOH$ as the lithium precursor, the melting point thereof is 462 °C, and thus annealing may be performed at preferably 400 to 600 °C, more preferably 450 to 480 °C. Within this range, a crystal structure may be recovered, and thus the rate performance of a battery may be excellent.

The annealing temperature may be preferably a temperature exceeding the melting point of the lithium precursor. However, when the annealing temperature exceeds 1000 °C, thermal decomposition of the cathode active material may occur, resulting in deterioration of battery performance. Accordingly, the annealing temperature is preferably 1000 °C or lower.

In annealing step (d), as a method of adding a lithium precursor to the filtered cathode active material, the filtered cathode active material may be dried, and then a solid or liquid lithium precursor may be added to thereto. Preferably, a solid lithium precursor may be added to thereto. In this case, process costs may be reduced. When adding a liquid lithium precursor, the cathode active material and the lithium precursor may be mixed uniformly. As another example, after adding a lithium precursor solution to the filtered cathode active material, spray drying may be performed so that drying of the cathode active material and lithium precursor addition are performed in one step. In this case, particle agglomeration due to drying may be reduced, and the process of mixing a solid phase lithium precursor may be omitted. In addition, a product in the form of powder rather than a lump may be obtained by spray drying.

For example, the lithium precursor solution may be prepared using a lithium compound that is soluble in an aqueous solution or an organic solvent.

For example, the lithium precursor solution may have a concentration of 1 to 15 % (weight (g) of solute dissolved in 100 g of solution), preferably 3 to 10 %. Within this range, the lithium precursor may be uniformly sprayed onto the cathode active material.

**(e) Obtaining reusable cathode active material by coating surface of annealed cathode active material**

The method of recycling a cathode active material according to the present invention optionally includes step (e) of obtaining a reusable cathode active material by coating the surface of the annealed cathode active material with a coating agent. In this case, structural stability and electrochemical performance may be improved while maintaining the intrinsic properties of the cathode active material.

In the surface coating, preferably, the surface may be coated with a coating agent including one or more of a metal, an organic metal, and a carbon component in a solid or liquid manner, and then may be heat-treated at 100 to 1200 °C. In this case, structural stability and electrochemical performance may be improved while maintaining the intrinsic properties of the cathode active material.

The coating agent including a metal may be preferably a coating agent including one or more selected from the group consisting of B, W, Al, Ti, Mg, Ni, Co, Mn, Si, Zr, Ge, Sn, Cr, Fe, V, and Y, more preferably a coating agent including one or more selected from the group consisting of B, W, Al, Ti, and Mg, still more preferably a coating agent including boron (B), tungsten (W), or a mixture thereof, still more preferably a coating agent including tungsten (W) and boron (B), as a specific example, a coating agent including tungsten boride (WB). In this case, resistance characteristics and lifespan characteristics may be improved.

For example, the coating agent including a metal may be an oxide or an acid including the metal as an element in the molecule thereof.

As the coating agent including an organic metal, coating agents including an organic metal compound containing a metal commonly used in the art to which the present invention pertains may be used without particular limitation. As a specific example, metal alkoxides may be used.

As the coating agent including a carbon component, coating agents including a carbon component commonly used in the art to which the present invention pertains may be used without particular limitation. As a specific example, sugars such as sucrose may be used.

For example, based on components coated on the surface of the cathode active material excluding a solvent, based on 1 mol% of the metal in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

The heat treatment temperature may preferably 100 to 1000 °C, more preferably 200 to 1000 °C, still more preferably 200 to 500 °C. Within this range, performance degradation due to thermal decomposition of the cathode active material may be prevented, and structural stability and electrochemical performance may be improved.

The heat treatment time may be preferably 1 to 16 hours, more preferably 3 to 7 hours. Within this range, structural stability and electrochemical performance may be improved while maintaining the intrinsic properties of the cathode active material.

Coating methods commonly used in the art to which the present invention pertains may be used as the coating method of the present invention without particular limitation. For example, a liquid method of mixing a cathode active material and a liquid coating agent, a mechanochemical method using the high mechanical energy of ball milling, a fluid bed coating method, a spray drying method, a precipitation method of precipitating a coating agent onto the surface of a cathode active material in an aqueous solution, a method using reaction between a vapor phase coating agent and a cathode active material, or sputtering may be used.

For example, the metal, organic metal, and carbon component may have a spherical shape, a plate shape, a square shape, or a needle shape. For example, such a shape may be controlled by changing process conditions in the preparation process. Each shape is not particularly limited as long as the shape follows a definition commonly accepted in the art to which the present invention pertains.

The coating agent may have preferably an average diameter of 1 to 1000 nm and a specific surface area of 10 to 100 $m^2$/g, more preferably an average diameter of 10 to 100 nm and a specific surface area of 20 to 100 $m^2$/g. Within this range, the coating agent may be uniformly adhered to the surface of the cathode active material, thereby improving the structural stability of the cathode active material. Thus, reduction of the lifespan of the cathode active material and degradation of the electrochemical performance thereof due to lattice deformation or collapse of a crystal structure may be prevented.

In the present disclosure, the average diameter may be measured by a measuring method commonly used in the art to which the present invention pertains. For example, the average diameter may be measured by a laser diffraction method. Specifically, cathode active material particles are dispersed in a dispersion medium, the dispersed particles are placed in a commercially available laser diffraction particle size measuring device such as Microtrac MT 3000, and the particles are irradiated with an ultrasonic wave of about 28 kHz with an output of 60 W. Then, an average particle diameter (D50) is calculated based on 50 % of the particle size distribution in the measuring device.

In the present disclosure, the specific surface area may be measured by a measuring method commonly used in the art to which the present invention pertains. For example, the specific surface area may be measured by Brunauer-Emmett-Teller (BET) method. Specifically, the specific surface area may be calculated based on the amount of nitrogen gas adsorbed under liquid nitrogen temperature (77 K) using BELSORP-mino II manufactured by BEL Japan Co.

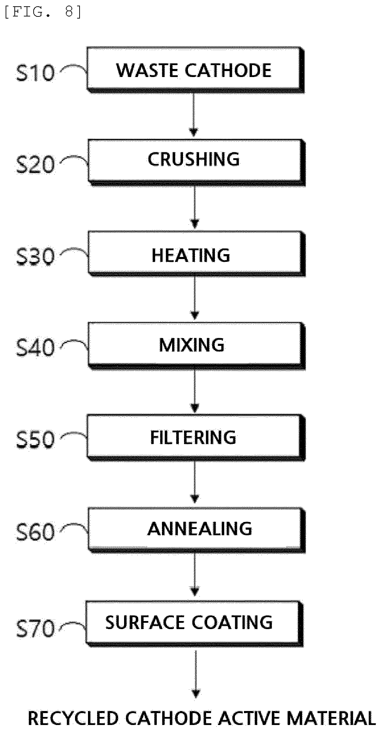

FIG. 8 below is a flowchart for explaining a process for recycling a cathode active material according to one embodiment of the present invention.

Referring to FIG. 8, first, cathode scraps as waste cathodes are prepared (step S10). For example, aluminum foil is coated with slurry prepared by adding N-methyl pyrrolidone (NMP) to an NCM-based lithium composite transition metal oxide, carbon black, and polyvinylidene fluoride and performing mixing, and then drying is performed in a vacuum oven set to about 120 °C to obtain a cathode sheet. Then, the cathode sheet is punched out to obtain a cathode plate of a certain size. In this process, cathode scraps are generated.

The cathode scrap includes aluminum foil and a cathode active material layer formed on the aluminum foil. After volatilizing a solvent, the cathode active material layer has a structure in which a cathode active material and a conductive material are combined by a binder. Accordingly, when the binder is removed, the cathode active material is separated from the aluminum foil.

Next, the prepared cathode scraps are crushed into pieces of appropriate sizes (step S20). Here, the crushing includes cutting or shredding cathode scraps into easy-to-handle sizes. As a specific example, the crushed cathode scraps may have a size of 1 cm × 1 cm. For example, the crushing may be performed using a dry crushing device such as a hand-mill, a pin-mill, a disk-mill, a cutting-mill, and a hammer-mill. To increase productivity, a high-speed cutting machine may be used.

Preferably, whether to perform the crushing or the size of the pieces may be determined by considering the handling of cathode scraps and the characteristics of equipment used in the subsequent process. For example, when using equipment capable of continuous processing, cathode scraps must be crushed into smaller pieces because the pieces must have good fluidity.

Next, the cathode scraps are heat-treated to recover a cathode active material (step S30). Here, heat treatment is performed to thermally decompose a binder within an active material layer.

For example, the heat treatment may be performed under an air atmosphere or under an oxygen atmosphere, preferably under an air atmosphere. Through the heat treatment under an air atmosphere, the binder and the conductive material in the active material layer are thermally decomposed into $CO_2$ and $H_2O$ and removed. Since the binder is removed, the cathode active material may be separated from a current collector, and the separated cathode active material in powder form may be easily selected. Accordingly, in step S30, the active material layer may be separated from the current collector, and the cathode active material in the active material layer may be recovered in powder form.

It is important that the heat treatment is performed under an air atmosphere. When the heat treatment is performed in a reducing gas or inert gas atmosphere, the binder and the conductive material are carbonized rather than thermally decomposed. When the binder and the conductive material are carbonized, carbon components remain on the surface of the cathode active material, resulting in deterioration in the performance of a recycled cathode active material. In contrast, when the heat treatment is performed in the air, both the binder and the conductive material are removed because carbon components in the binder and conductive material reacts with oxygen, are converted into gases such as CO and $CO_2$, and disappears.

The heat treatment is performed at preferably 300 to 650 °C, as a specific example, 550 °C. When the heat treatment is performed at a temperature less than 300 °C, since the binder is not removed, separation of the current collector is difficult. When the heat treatment is performed at a temperature exceeding 650 °C, the current collector melts, making separation of the current collector impossible.

The heat treatment is performed at a temperature increase rate of preferably 1 to 20 °C/min, more preferably 3 to 10 °C/min, as a specific example, 5 °C/min. Within this range, heat treatment may be performed without causing strain to heat treatment equipment, and thermal shock to scraps may be prevented.

The heat treatment may be performed until the binder is completely thermally decomposed. For example, the heat treatment may be performed for preferably 30 minutes or more, more preferably 30 minutes to 5 hours, as a specific example, 30 minutes. Within this range, the binder may be completely thermally decomposed, and thermal decomposition efficiency may be excellent.

For example, the heat treatment may be performed using various types of furnaces. For example, a box-type furnace may be used. Considering productivity, a rotary kiln capable of continuous processing may be used.

After the heat treatment, slow cooling or rapid cooling may be performed in the air.

Next, the recovered cathode active material is mixed with a washing solution (step S40).

Since fluorine (F) and lithium remain on the surface of the recovered cathode active material in mixing step S40, a process of removing fluorine (F) and lithium is required.

In the mixing step, the recovered cathode active material may be washed using water or a basic aqueous lithium compound solution as a washing solution. The water may be preferably distilled water or deionized water. In this case, metal fluorides such as LiF may be removed, and surface modification may be achieved.

The basic aqueous lithium compound solution may include a lithium compound in an amount of greater than 0 % by weight and 15 % by weight or less, preferably greater than 0 % by weight and 10 % by weight or less. In this case, metal fluorides such as LiF remaining on the surface of the recycled cathode active material may be removed, and surface modification may be achieved. When the lithium compound is included in an amount exceeding 15 % by weight, even after washing, an excess of lithium compounds such as LiOH and $LiNO_3$ may be remained on the surface of the cathode active material, which may affect the subsequent annealing process.

Specifically, the lithium compound may be LiOH.

The reason for mixing the recovered cathode active material with the basic aqueous lithium compound solution is to remove LiF and metal fluorides that may exist on the surface of the recovered active material and perform surface modification. During the heat treatment of step S30, the binder and the conductive material in the cathode active material layer are converted to $CO_2$ and $H_2$, and are vaporized and removed. In this process, $CO_2$ and $H_2O$ may react with lithium on the surface of the cathode active material to form $Li_2CO_3$ and LiOH, and fluorine (F) present in the binder, such as PVdF, may react with metal elements constituting the cathode active material to form LiF or metal fluorides. When LiF or the metal fluorides remain on the surface of the cathode active material, battery characteristics deteriorate when reused. In the present invention, by performing mixing as in step S40, any reactants that may have formed during heat treatment step S30 on the surface of the recycled cathode active material are removed to ensure that no foreign substances remain on the surface of the recycled cathode active material.

In step S40, it is important to mix with a basic aqueous lithium compound solution. When an aqueous sulfuric acid or hydrochloric acid solution is used rather than a basic aqueous lithium compound solution, although F on the surface of the cathode active material may be removed, transition metals (Co, Mg) present in the cathode active material may be eluted, deteriorating the performance of the recycled cathode active material. The basic aqueous lithium compound solution used in the present invention may remove any trace amounts of the binder that may remain after the heat treatment in step S30. In addition, the basic aqueous lithium compound solution does not elute transition metals present in the cathode active material and also plays a role in replenishing the amount of lithium that may be eluted during the washing process.

The mixing may be performed by immersing the recovered active material in a washing solution. The immersing may be performed within a week, preferably within a day, still more preferably within 1 hour. When immersing for more than a week, there is a possibility of capacity degradation due to excessive elution of lithium. Accordingly, immersing is preferably performed within 1 hour.

The mixing includes immersing the cathode active material in the washing solution and stirring while immersing the active material in the washing solution. It is preferable to combine stirring and immersing. When a basic aqueous lithium compound solution is used as a washing solution, when only immersing is performed without stirring, the washing process may be slowed down, and elution of lithium may be caused. When immersing and stirring are combined, process time may be minimized. Thus, stirring and immersing are preferably performed at the same time.

In the mixing, the weight ratio of the recovered cathode active material to the washing solution may be 1:1 to 1:40, preferably 1:1 to 1:35, more preferably 1:1 to 1:30. Within this range, metal fluorides such as LiF may be efficiently removed.

Next, the mixed cathode active material is filtered (step S50).

The filtration may preferably include a step of filtering the mixed cathode active material.

For example, the filtration may be performed using a belt press, a filter press, a screw press, a screw decanter, or a centrifuge, preferably a filter press.

It is important to adjust the moisture content of the filtered cathode active material within a certain range. In this case, metal fluorides, such as LiF, which tends to remain in the recycled cathode active material, may be removed more effectively, process costs may be saved by reducing the time and energy required, and the capacity characteristics of a secondary battery may be improved.

For example, the filtered cathode active material may have a moisture content of 5 to 10.5 % by weight, preferably 5 to 8 % by weight, more preferably 5 to 7 % by weight as calculated by Equation 1 below. Within this range, the content of metal fluorides such as LiF may be minimized, and process costs may be reduced.

[Equation 1]

$$\text{Moisture content (wt\%)} = [(A - B) / A] \times 100$$

In Equation 1, A represents the weight (g) of the filtered cathode active material, and B represents the weight (g) of the filtered cathode active material after vacuum drying at 100 °C for 12 hours.

For example, the moisture content of the cathode active material may reach the above range by performing filtration for 3 to 14 minutes, preferably 3 to 11 minutes, more preferably 3 to 8 minutes. When filtration time is less than 3 minutes, as the washing solution is not sufficiently removed, the moisture content may be high, and the content of metal fluorides such as LiF may increase. In addition, when filtration time exceeds 14 minutes, the moisture content and the content of metal fluorides such as LiF may increase, and energy consumption may increase.

For example, during the filtration, the one-time input amount of the cathode active material mixed with the washing solution may be 2 to 3.1 kg, preferably 2.5 to 3.1 kg, more preferably 2.7 to 3.1 kg. Within this range, filtration efficiency may be excellent. When the input amount is less than 2 kg, process costs may increase. When the input amount exceeds 3.1 kg, the moisture content may increase and the content of metal fluorides such as LiF may increase.

The cathode active material filtered in a moisture content of 5 to 10.5 % by weight may be obtained in the form of a cake.

The filtered cathode active material may have an F content of preferably 405 ppm or less, more preferably 1 to 405 ppm. Within this range, the capacity characteristics of a secondary battery may be improved.

The cathode active material in the form of a cake obtained after the filtration may preferably be dried. In this case, the annealing process may be performed smoothly.

For example, the drying may be vacuum drying at 70 to 140 °C, preferably 100 to 140 °C, more preferably 120 to 140 °C.

Next, a lithium precursor is added to the filtered cathode active material and annealing is performed (step S60) .

In annealing step S60, it is important to add the lithium precursor to the filtered cathode active material and perform annealing to have a predetermined moisture content. In this case, during the preceding steps S30 and S40, lithium in the cathode active material may be lost. In step S60, the lost lithium is replenished.

In addition, in step S60, through annealing, the crystal structure of the active material may be recovered. Thus, the properties of the recycled active material may be equal to or better than those of a fresh cathode active material.

During the preceding steps S30 and S40, deformation structures may be formed on the surface of the cathode active material. As a specific example, on the cathode active material, which is an NCM-based lithium composite transition metal oxide, a spinel structure may be formed by converting Ni into rock salt such as $[NiCO_2 \cdot 2Ni(OH)_2)H_2O]$ by moisture in step S40. When a battery is manufactured in this way, deterioration in battery characteristics, such as capacity reduction, may occur. According to the present invention, through step S60, the crystal structure may be recovered. As a specific example, the cathode active material, which is an NCM-based lithium composite transition metal oxide, is restored to a hexagonal structure. Accordingly, the initial characteristics may be restored or improved to the level of a fresh cathode active material.

The lithium precursor of step S60 may include one or more of $LiOH$, $Li_2CO_3$, $LiNO_3$, and $Li_2O$.

As a method of adding a lithium precursor to the filtered cathode active material, the filtered cathode active material may be dried, and then a solid or liquid lithium precursor may be added to thereto. As another example, after adding a lithium precursor solution to the filtered cathode active material, spray drying may be performed so that drying and lithium precursor addition are performed in one step. At this time, a lithium precursor solution may be prepared by using a lithium compound that is soluble in an aqueous solution or an organic solvent. Specifically, the filtered cathode active material may be dried, and then a solid lithium precursor may be added thereto. In this case, process costs may be reduced.

When drying is performed immediately in an oven after the surface modification process by mixing with the washing solution, cathode active material particles may agglomerate to form lumps. To mix the agglomerated particles and the lithium precursor, a process of grinding the lumps is required. As a result, the process becomes complicated and a continuous process may be difficult. In particular, in the case of the NCM-based cathode active material, when the lithium precursor and the powder are mixed and milling is performed in the presence of moisture, the cathode active material absorbs moisture and aggregation occurs severely. Accordingly, when mixing with the washing solution is performed, filtration is performed to adjust the moisture content of the cathode active material, the cathode active material is mixed with and dispersed in the lithium precursor solution, and then spray drying is performed, particle aggregation due to drying may be prevented, and the process of mixing the solid lithium precursor may be omitted. That is, powder rather than lumps may be produced by spray drying.

As a specific example, the concentration of the lithium precursor solution may be 3 to 10 %. Based on 100 mol% in total of lithium contained in the cathode active material, the lithium precursor solution containing lithium equivalent to 1 to 40 mol%, preferably 1 to 15 mol%, more preferably 1 to 10 mol% may be added.

During spray drying, as the lithium precursor solution is dried immediately after spraying, the surface of the cathode active material is coated with the lithium precursor component, or the lithium precursor component contacts the surface of the cathode active material. At this time, when drying the lithium precursor solution as a solvent, the particles are agglomerated by capillary force, and the particle size may be adjusted. In the case of cathode scraps made of electrodes, the particles on the surface may be pressed and cracked or broken during a rolling process. Particularly, compared to LCO-based active materials, an NCM-based active material has severe particle splitting due to rolling during electrode formation. Accordingly, compared to a fresh cathode active material, the recovered cathode active material contains many small particles, and the particle size may become uneven.

In addition, an NCM-based active material includes large particles (secondary particles) formed by gathering primary particles having a size of tens to hundreds of nanometers. In the case of a cathode made of such an active material, during a rolling process to control the porosity in the electrode, secondary particles are cleaved and converted into primary particles or small particles having a larger size than the primary particles.

Since the specific surface area of the active material increases as the number of particles broken by rolling increases, in the case of recycled active materials obtained from rolled electrodes, when reused, slurry properties, electrode adhesion, and electrode performance may be adversely affected.

As described above, through the spray drying step, the surface of the active material is coated with the lithium precursor, and the particle size of the active material is controlled. Since lithium precursor addition, granulation, and drying are performed in one step, the effect of process simplification may be obtained.

In addition, since the filtered cathode active material particles are mixed with and dispersed in a lithium precursor solution of a certain concentration, filtration and spray drying may be performed continuously. Thus, in the case of the method of recycling a cathode active material according to embodiments of the present invention, the processes may be performed continuously, and lithium precursor coating, drying, and granulation (in other words, particle readjustment) may be performed simultaneously in one step.

In addition, loss of lithium in the cathode active material occurs during preceding steps S30 and S40. In step S60, the loss amount of lithium is supplemented. In addition, during the preceding steps, a deformed structure (e.g., $Co_3O_4$ in the case of an LCO active material) may be formed on the surface of the cathode active material. In step S60, the crystal structure of the cathode active material may be recovered through annealing, thereby improving the battery characteristics of a recycled cathode active material, or restoring the battery characteristics of the recycled cathode active material to the level of battery characteristics of a fresh cathode active material. Here, "fresh" is a concept opposite to "recycling", a fresh material means that the material was made for the first time, and the fresh material is the same word as "raw material" used in the examples.

As a specific example, LiOH is used as the lithium precursor.

Based on the molar ratio of lithium to other metals in a fresh cathode active material contained in the cathode active material layer, the lithium precursor is preferably added in a minimum amount corresponding to the lost lithium molar ratio. When an excess of lithium precursor is added relative to the amount of lithium lost, the unreacted lithium precursor may remain in a recycled cathode active material, which increases resistance. Accordingly, an appropriate amount of the lithium precursor needs to be added. For example, when the molar ratio of lithium to other metals in a fresh cathode active material is 1, the lithium precursor may be added in an amount such that the molar ratio of lithium is 0.001 to 0.4, preferably 0.01 to 0.4, more preferably 0.09 to 0.2.

As a specific example, when the lithium precursor is added at a molar ratio of 0.09 to 0.1 (based on lithium metal), which is a loss ratio relative to a lithium content in a fresh cathode active material, based on ICP analysis results, the capacity may be increased to a level equivalent to that of the fresh cathode active material. Here, the ICP analysis results have an error value of about $\pm 0.02$.

As another example, based on 100 mol% in total of lithium included in a cathode active material as a raw material, the lithium precursor may be added in an amount corresponding to 1 to 40 mol%, preferably 1 to 25 mol%, more preferably 1 to 15 mol%, still more preferably 3 to 15 mol%.

For example, the annealing may be performed in air at 400 to 1000 °C, preferably at 600 to 900 °C. In this case, the temperature should be determined within a limited range according to the types of the lithium precursor.

The annealing temperature is preferably a temperature exceeding the melting point of the lithium precursor. However, since performance degradation occurs due to thermal decomposition of the cathode active material at a temperature exceeding 1000 °C, the annealing temperature should not exceed 1000 °C. When $Li_2CO_3$ is used as the lithium precursor, the annealing temperature is preferably 700 to 900 °C, more preferably 710 to 780 °C, most preferably 750 to 780 °C. In addition, when LiOH is used as the lithium precursor, the annealing temperature is preferably 400 to 600 °C, more preferably 450 to 480 °C, most preferably 470 to 480 °C.

For example, the annealing time is preferably 1 hour or more, more preferably 15 hours or less, still more preferably 4 to 6 hours. When the annealing time is long, a crystal structure may be sufficiently recovered, but even long-term annealing does not significantly affect performance. In this case, the same or similar equipment as in step S30 of performing heat treatment may be used as the annealing equipment.

Next, as an optional step, the surface of the annealed cathode active material may be coated with a coating agent (step S70).

For example, in the surface coating, the surface is coated with a coating agent containing metals, organic metals, or carbon in a solid or liquid phase and heat-treated. When the heat treatment temperature is too low, formation of a desired surface protection layer by the dissimilar metals may not occur. When the heat treatment temperature is too high, due to thermal decomposition of the cathode active material, battery performance may deteriorate.

Specifically, when the washed cathode active material is coated with a metal oxide such as B, W, and B-W or an acid and heat-treated, a surface protection layer such as a lithium boron oxide layer is formed on the surface of the cathode active material.

The surface coating may be performed using a solid-phase or liquid-phase method, as a specific example, mixing, milling, spray drying, or grinding.

When the molar ratio of lithium to other metals in the cathode active material in the annealing step S60 is 1:1, lithium in the cathode active material reacts with the coating agent in surface coating step S70, and the molar ratio of lithium to other metal in the cathode active material is less than 1:1. In this case, the capacity of a battery containing the recycled cathode active material may not be fully (up to 100 %) expressed. However, in annealing step S60, when an excess of the lithium precursor is added so that lithium is contained in a greater molar ratio of 0.0001 to 0.1 compared to other metals in the cathode active material, a surface protection layer is formed in surface coating step S70, and the molar ratio of lithium to other metals in the cathode active material becomes 1:1, thereby preventing battery capacity degradation.

## Recycled cathode active material

A recycled cathode active material of the present invention is prepared by the method of recycling a cathode active material described above. The recycled cathode active material may have a fluorine (F) content of 405 ppm or less, preferably 1 to 405 ppm. In this case, the capacity characteristics of a secondary battery may be excellent. In addition, the recycled cathode active material may be environmentally friendly, may prevent generation of toxic gases or explosion by not using organic solvents, and may greatly improve economics and productivity.

In addition, the recycled cathode active material of the present invention includes one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide and has a fluorine (F) content of 405 ppm or less. In this case, the capacity characteristics of a secondary battery may be excellent. In addition the recycled cathode active material may be environmentally friendly, may prevent generation of toxic gases or explosion by not using organic solvents, and may greatly improve economics and productivity.

The recycled cathode active material may include preferably one or more selected from the group consisting of a lithium cobalt oxide such as $LiCoO_2$ (hereinafter referred to as "LCO") ; a lithium manganese oxide such as $LiMnO_2$ or $LiMn_2O_4$; a lithium iron phosphate compound such as $LiFePO_4$; a lithium nickel cobalt aluminum oxide (NCA); a lithium nickel oxide such as $LiNiO_2$; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide. In this case, electrochemical performance, resistance characteristics, and capacity characteristics may be excellent.

As a specific example, the cathode active material may be a compound represented by Chemical Formula 1 below.

$$[\text{Chemical Formula 1}] \qquad Li_aNi_xMn_yCo_zM_wO_{2+\delta}$$

In Chemical Formula 1, M includes one or more selected from the group consisting of B, W, Al, Ti, and Mg, $1<a\leq1.1$, $0<x<0.95$, $0<y<0.8$, $0<z<1.0$, $0\leq w\leq0.1$, $-0.02\leq\delta\leq0.02$, and $x+y+z+w=1$. The cathode active material has a fluorine (F) content of 405 ppm or less, and the surface thereof is coated with a coating agent containing a metal or carbon. In this case, electrochemical performance, resistance characteristics, and capacity characteristics may be excellent.

The fluorine (F) content may be preferably 1 to 405 ppm. Within this range, excellent resistance characteristics and capacity characteristics may be implemented.

The recycled cathode active material may be coated with a coating agent containing metals or carbon, preferably a coating agent containing metals. In this case, the structural stability of the cathode active material may be improved without chemical and physical change of the cathode active material, thereby improving rate performance, lifespan characteristics, and electrochemical properties such as capacity. In addition, substitution with heterogeneous elements occurs on the surface of the cathode active material, and as a result, the amount of residual lithium and pH are reduced, thereby improving physicochemical properties.

The metal includes preferably one or more selected from the group consisting of B, W, Al, Ti, Mg, Ni, Co, Mn, Si, Zr, Ge, Sn, Cr, Fe, V, and Y, more preferably one or more selected from the group consisting of B, W, Al, Ti, and Mg, still more preferably boron (B), tungsten (W), or a mixture thereof, still more preferably tungsten (W) and boron (B), as a specific example, tungsten boride (WB). In this case, resistance characteristics and lifespan characteristics may be improved.

For example, based on 1 mol% of metals in the cathode active material before coating, the coating agent may be included in an amount of 0.001 to 0.3 mol%, preferably 0.01 to 0.3 mol%, more preferably 0.01 to 0.15 mol%, still more preferably 0.01 to 0.1 mol%, still more preferably 0.01 to 0.05 mol%. Within this range, structural stability and electrochemical performance may be improved while maintaining the intrinsic properties of the cathode active material.

The coating may be performed by coating a surface with a solid or liquid coating agent containing a metal or carbon and heating the surface at 100 to 1200 °C, preferably 200 to 1000 °C, more preferably 250 to 800 °C. In this case, structural stability and electrochemical performance may be improved while maintaining the intrinsic properties of the cathode active material.

Description of the recycled cathode active material of the present invention may include all of the description of the method of recycling a cathode active material described above, and thus repeated description is omitted in this specification.

### Secondary battery

A secondary battery of the present invention includes a cathode including a current collector for cathodes and a cathode active material layer coated thereon; an anode including a current collector for anodes and an anode active material layer coated thereon; and a separator. The cathode active material layer includes the recycled cathode active material according to the present invention. In this case, a secondary battery having excellent electrochemical performance, resistance characteristics, and capacity characteristics may be provided.

Separators commonly used in the technical field to which the present invention pertains may be used in the present invention without particular limitation. Preferably, separators with pore diameters from 0.01 to 10 $\mu$m and thicknesses from 5 to 300 $\mu$m may be used. As a specific example, examples of the separator may include olefin-based polymers such as polypropylene; and sheets or non-woven fabrics made of glass fiber or polyethylene. In this case, high ion permeability, mechanical strength, insulation, chemical resistance, and hydrophobicity may be achieved.

In the present disclosure, the pore diameter may be measured using a measurement method commonly used in the technical field to which the present invention pertains.

For example, the secondary battery may include an electrolyte. As a specific example, the secondary battery may include an electrolyte solution. For example, the electrolyte solution may include an organic solvent and lithium salt.

For example, the organic solvent may be an aprotic solvent. As a specific example, the organic solvent may include one or more selected from the group consisting of N-methyl-2-pyrrolidinone, propylene carbonate, ethylene carbonate, butylene carbonate, dimethyl carbonate, diethyl carbonate, gamma-butyrolactone, 1,2-dimethoxy ethane, tetrahydroxy franc, 2-methyl tetrahydrofuran, dimethyl sulfoxide, 1,3-dioxolane, formamide, dimethylformamide, dioxolane, acetonitrile, nitromethane, methyl formate, methyl acetate, phosphate triester, trimethoxy methane, dioxolane derivatives, sulfolane, methyl sulfolane, 1,3-dimethyl-2-imidazolidinone, propylene carbonate derivatives, tetrahydrofuran derivatives, ethers, methyl propionate, and ethyl propionate.

For example, the lithium salt may include one or more selected from the group consisting of $LiCl$, $LiBr$, $LiI$, $LiClO_4$, $LiBF_4$, $LiB_{10}Cl_{10}$, $LiPF_6$, $LiCF_3SO_3$, $LiCF_3CO_2$, $LiAsF_6$, $LiAlCl_4$, $CH_3SO_3Li$, $CF_3SO_3Li$, and $(CF_3SO_2)_2NLi$.

The secondary battery may preferably be used as a power source for electric vehicles, hybrid electric vehicles, plug-in hybrid electric vehicles, and power storage systems.

Hereinafter, the present invention will be described in more detail with reference to the following preferred examples. However, these examples are provided for illustrative purposes only and should not be construed as limiting the scope and spirit of the present invention. In addition, it will be apparent to those skilled in the art that various changes and modifications may be made without departing from the spirit and scope of the present invention, and such changes and modifications are also within the scope of the appended claims.

[Examples]

[Test Example I: Change in moisture content depending on filtration time]

After blanking a cathode plate, discarded cathode scraps (current collector: aluminum foil, cathode active material: NCM-based lithium composite transition metal oxide) were crushed, and the crushed scraps were heat-treated at 570 °C for 30 minutes in air to remove a binder and a conductive material and separate a current collector and a cathode active material. Through these processes, the cathode active material was recovered. At this time, temperature was increased to the heat treatment temperature at a temperature-increasing rate of 5 °C/min, and air was supplied at a rate of 3 L/min.

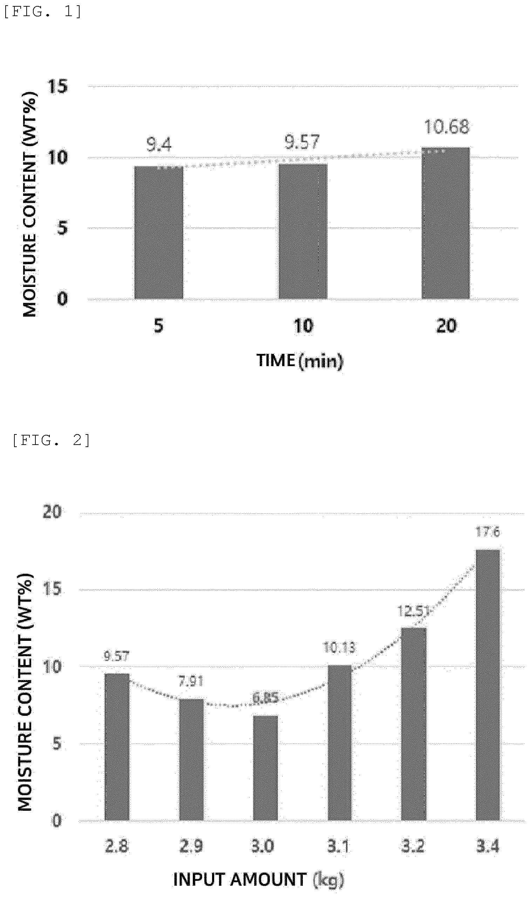

The recovered cathode active material was immersed in an aqueous LiOH solution as a washing solution and mixed by stirring for 5 minutes. 3.1 kg of the mixed cathode active material was filtered for 5 minutes, 10 minutes, or 20 minutes using a filter press, and then the moisture content thereof was calculated by Equation 1 below. The change in moisture content depending on filtration time is shown in FIG. 1 below.

[Equation 1]

$$\text{Moisture content (wt\%)} = [(A - B) / A] \times 100$$

In Equation 1, A represents the weight (g) of the filtered cathode active material, and B represents the weight (g) of the filtered cathode active material after vacuum drying at 100 °C for 12 hours.

As shown in FIG. 1 below, the moisture content was lowest when filtered for 5 minutes. In addition, there was no significant difference in the moisture content when the filtration time was 5 and 10 minutes. When the filtration time was increased to 20 minutes, the moisture content increased. Based on the above results, the filtration time was set to 5 minutes and the following experiment was performed.

[Test Example II: Change in moisture content depending on input amount of cathode active material]

The cathode active material recovered in Test Example I was immersed in an aqueous LiOH solution as a washing solution and mixed by stirring for 5 minutes. The mixed cathode active material was input into a filter press. At this time, the one-time input amount of the mixed cathode active material was 2.8 kg, 2.9 kg, 3.0 kg, 3.1 kg, 3.2 kg, or 3.4 kg. Then, filtration was performed for 5 minutes, and the moisture content was calculated by Equation 1. Changes in the moisture content depending on the input amounts of the cathode active material are shown in FIG. 2 below.

As shown in FIG. 2 below, the moisture content was lowest when the one-time input amount was 3.0 kg. As the input amount of the cathode active material was increased from 2.8 kg to 3.0 kg, the moisture content gradually decreased. When the input amount was 3.2 kg or more, the moisture content increased.

[Test Example III: Change in moisture content and residual F content depending on filtration time]

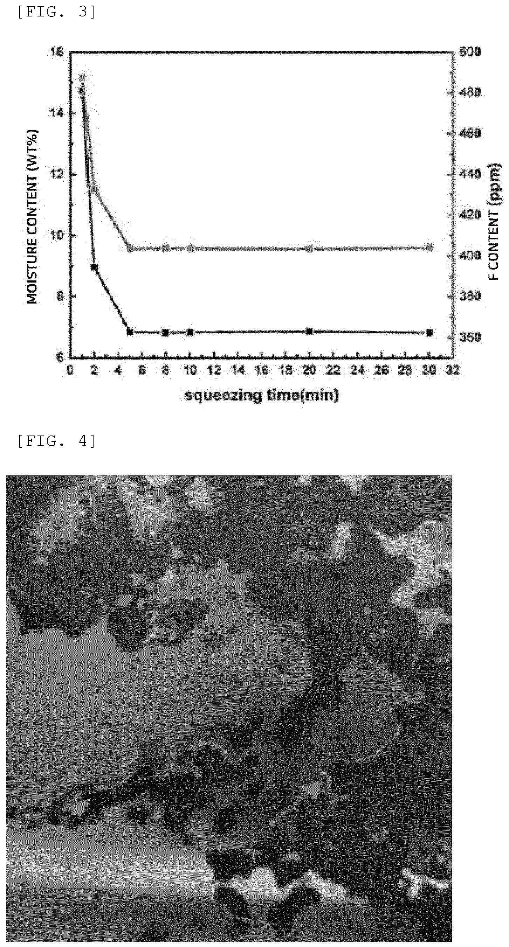

The cathode active material recovered in Test Example I was immersed in an aqueous LiOH solution as a washing solution and mixed by stirring for 5 minutes. 3.0 kg of the mixed cathode active material was filtered for 1 minute, 2 minutes, 5 minutes, 8 minutes, 10 minutes, 20 minutes, or 30 minutes using a filter press, and the moisture content was calculated by Equation 1 above. In addition, the content of fluorine (F) remaining in the cathode active material obtained after filtration was measured using an ICP analysis device, and the results are shown in FIG. 3 below. At this time, an ICP analysis device commonly used in laboratories may be used, but there is no difference depending on measurement devices or methods.

As shown in FIG. 3 below, when the filtration time was less than 3 minutes, the moisture content was very high, and the residual F content was high. In addition, even when the filtration time exceeded 14 minutes, it was confirmed that a lot of energy was consumed while the moisture content was no longer reduced and there was no change in the residual F content.

Example 1

After blanking a cathode plate, discarded cathode scraps (current collector: aluminum foil, cathode active material: NCM-based lithium composite transition metal oxide) were crushed, and the crushed scraps were subjected to heat treatment at 570 °C for 30 minutes in the air to remove a binder and a conductive material and separate a current collector and a cathode active material. Then, the cathode active material was recovered. At this time, temperature was increased to the heat treatment temperature at a temperature increase rate of 5 °C/min, and the air was supplied at a rate of 3 L/min.

The recovered cathode active material was immersed in an aqueous LiOH solution as a washing solution and mixed by stirring for 5 minutes. The mixed cathode active material was filtered for 5 minutes using a filter press so that the moisture content thereof was 6.8 % by weight, and the cathode active material in the form of a cake was obtained.

The filtered cathode active material was reduced by 0.1 mol based on 1 mol of lithium in the cathode active material compared to a raw material.

After drying the filtered cathode active material at 100 °C overnight, based on 1 mol of lithium in the (fresh) cathode active material as a raw material, 0.15 mol of LiOH was added, and annealing was performed at 750 °C for 5 hours in air. At this time, air was supplied at a rate of 3 L/min.

The annealed cathode active material was coated with boric acid and heated at 300 °C for 5 hours to obtain a recycled cathode active material as a final product. At this time, boric acid was added in an amount corresponding to 1000 ppm of boron lost in the previous process, temperature was increased to the heat treatment temperature at a temperature increase rate of 2 °C/min, and air was supplied at a rate of 3 L/min.

In the present disclosure, the molar ratio of lithium to other metals in the cathode active material and the amount of residual LiF were measured using an ICP analysis device. At this time, an ICP analysis device commonly used in laboratories may be used, but there is no deviation depending on the measurement device or method.

Comparative Example 1

A recycled cathode active material was prepared in the same manner as in Example 1 except that, in the filtration step of Example 1, filtration was performed so that the moisture content of a cathode active material was 12.5 % by weight.

Comparative Example 2

A recycled cathode active material was prepared in the same manner as in Example 1 except that, in the filtration step of Example 1, filtration was performed so that the moisture content of a cathode active material was 17.6 % by weight.

[Test Example III: Image analysis]

In Comparative Example 2 (moisture content: 17.6 % by weight), the cathode active material obtained after filtration was dried at 100 °C for 12 hours, and the image thereof was captured and analyzed.
FIG. 4 below shows the image of the cathode active material dried after filtration in Comparative Example 2. It was confirmed that an F compound and various impurities that were not completely removed in the mixing step were mixed with the cathode active material, recrystallized after filtration and drying, and precipitated while mixed with the recycled cathode active material. In FIG. 4, the red arrow indicates the F compound and various impurities that recrystallized and precipitated while mixed with the cathode active material.

[Test Example IV: EDS analysis]

The substances precipitated from the cathode active material dried after filtration in Comparative Example 2 were analyzed using an energy dispersive spectrometer (EDS), and the components and contents thereof are shown in Table 1 below.

[Table 1]

| Elements | wt% |
| --- | --- |
| C | 32.59 |
| O | 14.78 |
| F | 39.73 |
| Al | 0.72 |
| Co | 12.18 |
| Sum | 100.00 |

As shown in Table 1, in the substances recrystallized and precipitated from the cathode active material dried after filtration in Comparative Example 2, the F component accounts for the largest proportion.

[Test Example V: SEM and EDS mapping image analysis]

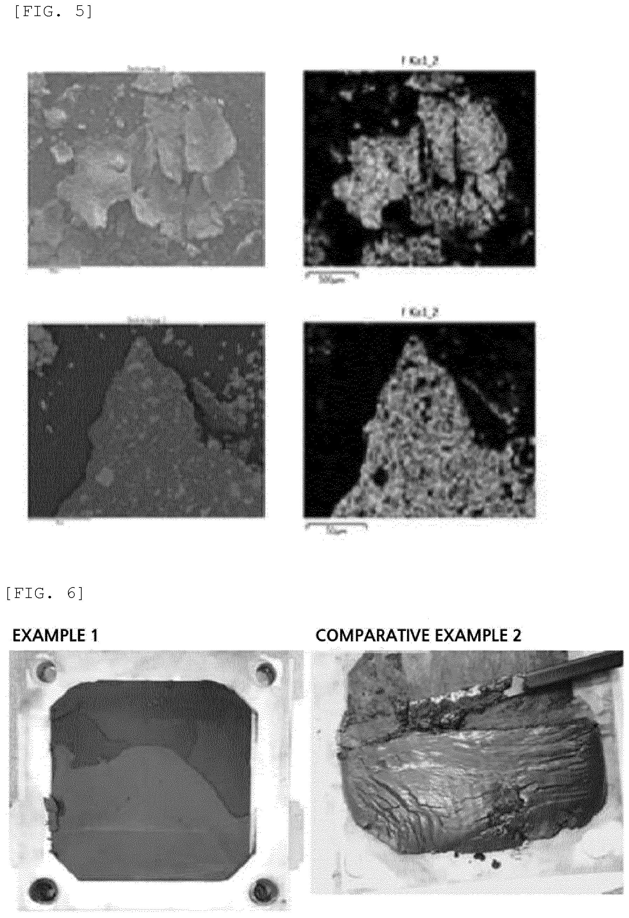

The cathode active materials dried after filtration in Comparative Examples 1 and 2 were analyzed using an SEM, and images obtained by EDS mapping the distribution of the F component are shown in FIG. 5 below. In FIG. 5, the top and bottom images correspond to Comparative Examples 1 and 2, respectively. On the left, SEM images are shown, and on the right, EDS mapping images showing the distribution of the F component are shown.
As shown in FIG. 5, it was confirmed that fluorine (F) element derived from LiF was detected overall on the surface of the cathode active material dried after filtration. In the right images of FIG. 5, the parts marked in green indicate the F components.

[Test Example VI: Image of cathode active material according to moisture content]

The images of the cathode active materials obtained after filtration in Example 1 and Comparative Example 2 are shown in FIG. 6 below.

As shown in FIG. 6, the cathode active material filtered to a moisture content of 6.8 % by weight according to Example 1 is the form of a cake, and the cathode active material filtered to a moisture content of 17.6 % by weight according to Comparative Example 2 is in the form of slurry. When the cathode active material is in the form of slurry due to high moisture content as in Comparative Example 2, the remaining F component in the cathode active material increases, reducing the capacity and lifespan of a secondary battery, and a lot of time and energy is consumed in the subsequent drying process.

[Test Example VII: Fluorine (F) content]

The content of fluorine (F) remaining in the cathode active material recovered after heat treatment in Example 1 and the contents of fluorine (F) remaining in the cathode active materials obtained after filtration in Example 1 and Comparative Examples 1 and 2 were measured using an ICP analysis device. The results are shown in Table 2 below.

[Table 2]

| Classification | F (ppm) |
|---|---|
| Cathode active material recovered after heat treatment | 6470 |
| Example 1 | 403.5 |
| Comparative Example 1 | 406.5 |
| Comparative Example 2 | 501.0 |

As shown in Table 2, the cathode active material recovered after heat treatment had a high fluorine content, but the fluorine content of the cathode active material filtered to have a moisture content of 6.8% by weight according to Example 1 was significantly reduced. In addition, it was confirmed that the fluorine content of Example 1 was reduced compared to Comparative Examples 1 and 2, where the moisture content thereof was 12.5 % by weight and 17.6 % by weight, respectively. That is, it was found that the residual F component was reduced by adjusting the moisture content in the filtration step.

[Test Example VIII: Evaluation of mono cell]

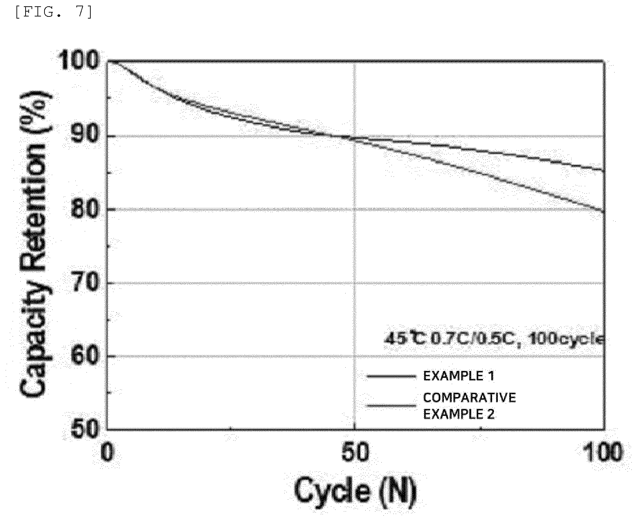

The electrochemical performance of the recycled cathode active materials prepared in Example 1 and Comparative Example 2 was measured through mono cell evaluation, and the results are shown in FIG. 7 below.

**[0201]** * Mono cell evaluation: 96 % by weight of a recycled cathode active material, 2 % by weight of carbon black as a conductive material, and 2 % by weight of PVdF as a binder were prepared and mixed with an NMP to obtain slurry. The cathode active material slurry was applied to aluminum foil having a thickness of 20 $\mu$m. Then, the aluminum foil was dried at 130 °C for 1 hour, and then blanked to a size of 30 mm $\times$ 42 mm to manufacture a cathode.

In addition, 95.6 % by weight of a mixture containing natural graphite and artificial graphite in a weight ratio of 5:5, 3.3 % by weight of a conductive material, and 1.1 % by weight of a binder were mixed to prepare anode active material slurry. Then, the slurry was applied to copper foil having a thickness of 10 $\mu$m. The copper foil was rolled and dried, and then blanked to a size of 31 mm $\times$ 43 mm to manufacture an anode.

After bonding the manufactured cathode and anode to a separator, an electrolyte solution having a weight ratio of ethylene carbonate (EC):ethyl methyl carbonate (EMC) of 3:7 was injected thereto to manufacture a polymer cell-type test mono cell.

A charge and discharge experiment in which the manufactured mono cell was charged at 45 °C and 0.7 C in a CC-CV mode to 4.25 V and discharged at a constant current of 0.5 C to 2.5V was performed 100 times, and the capacity maintenance rate was measured to evaluate lifespan characteristics. The results are shown in FIG. 7 below.

As shown in FIG. 7, as a result of mono cell evaluation for the recycled cathode active materials manufactured in Example 1 and Comparative Example 2, the recycled cathode active material (Example 1) obtained by controlling the moisture content of the cathode active material just before the annealing step according to the present invention to 6.8 % by weight exhibited excellent capacity maintenance rate even as the number of charge and discharge cycles increased, compared to the recycled cathode active material (Comparative Example 2) obtained by controlling the moisture content to 17.6 % by weight.

**Claims**

1. A method of recycling a cathode active material, comprising:

   (a) recovering a cathode active material by heat-treating a waste cathode comprising a current collector and a cathode active material layer coated thereon at 300 to 650 °C under an air or oxygen atmosphere;
   (b) mixing the recovered cathode active material and a washing solution;
   (c) filtering the cathode active material mixed with the washing solution; and
   (d) adding a lithium precursor to the filtered cathode active material and performing annealing at 400 to 1000 °C in air,
   wherein, in step (c), the filtered cathode active material has a moisture content of 5 to 10.5 % by weight as calculated by Equation 1 below.

   [Equation 1]

   $$\text{Moisture content (wt\%)} = [(A - B) \; / \; A] \times 100,$$

   wherein A represents a weight (g) of the filtered cathode active material, and B represents a weight (g) of the filtered cathode active material after vacuum drying at 100 °C for 12 hours.

2. The method according to claim 1, wherein the cathode active material layer comprises one or more selected from the group consisting of a lithium nickel oxide (LNO)-based cathode active material, a nickel·cobalt·manganese (NCM)-based cathode active material, a nickel·cobalt·aluminum (NCA)-based cathode active material, and a nickel·cobalt·manganese·aluminum (NCMA)-based cathode active material.

3. The method according to claim 1, wherein, in step (b), the washing solution is water or an aqueous lithium compound solution.

4. The method according to claim 3, wherein the aqueous lithium compound solution comprises a lithium compound in an amount of greater than 0 % by weight and 15 % by weight or less.

5. The method according to claim 1, wherein, in step (c), the filtration is performed using a belt press, a filter press, a screw press, a screw decanter, or a centrifuge.

6. The method according to claim 1, wherein, in step (c), the filtration is performed for 3 to 14 minutes.

7. The method according to claim 1, wherein, in step (c), the filtered cathode active material is in a form of a cake.

8. The method according to claim 1, wherein, in step (c), the filtered cathode active material has an F content of 405 ppm or less.

9. The method according to claim 1, wherein, in step (d), the lithium precursor comprises one or more selected from the group consisting of LiOH, $Li_2CO_3$, $LiNO_2$, and $Li_2O$.

10. The method according to claim 1, wherein, based on 100 mol% in total of lithium comprised in the cathode active material of step (a), the lithium precursor is added in an amount corresponding to 1 mol% to 40 mol%.

11. The method according to claim 1, comprising obtaining a reusable cathode active material by coating the annealed cathode active material with a coating agent.

12. The method according to claim 11, wherein the coating is performed by coating the surface with one or more of metals, organic metals, and carbon components in a solid or liquid form and heating the surface at 100 to 1200 °C.

13. A recycled cathode active material prepared using the method according to claims 1 to 12.

14. A recycled cathode active material comprising one or more selected from the group consisting of a lithium cobalt oxide; a lithium manganese oxide; a lithium iron phosphate compound; a lithium nickel cobalt aluminum oxide; a lithium nickel oxide; a nickel manganese-based lithium composite metal oxide obtained by replacing a part of nickel (Ni) with manganese (Mn) in the lithium nickel oxide; and an NCM-based lithium composite transition metal oxide obtained by replacing a part of nickel (Ni) with manganese (Mn) and cobalt (Co) in the lithium nickel oxide and having a fluorine (F) content of 405 ppm or less.

15. The recycled cathode active material according to claim 14, wherein a surface of the recycled cathode active material is coated with a coating agent containing a metal or carbon.

16. A secondary battery comprising the recycled cathode active material according to claim 14 or 15.

[FIG. 1]

[FIG. 2]

[FIG. 3]

[FIG. 4]

[FIG. 5]

[FIG. 6]

EXAMPLE 1                    COMPARATIVE EXAMPLE 2

[FIG. 7]

[FIG. 8]

S10 — WASTE CATHODE

↓

S20 — CRUSHING

↓

S30 — HEATING

↓

S40 — MIXING

↓

S50 — FILTERING

↓

S60 — ANNEALING

↓

S70 — SURFACE COATING

↓

RECYCLED CATHODE ACTIVE MATERIAL

## INTERNATIONAL SEARCH REPORT

| International application No. |
| --- |
| **PCT/KR2023/018746** |

| A. | CLASSIFICATION OF SUBJECT MATTER |
| --- | --- |

**H01M 10/54**(2006.01)i; **C22B 7/00**(2006.01)i; **C01G 53/00**(2006.01)i; **H01M 4/36**(2006.01)i; **H01M 4/525**(2010.01)i; **H01M 4/505**(2010.01)i; **H01M 4/62**(2006.01)i; **H01M 10/052**(2010.01)i; **H01M 4/02**(2006.01)i

According to International Patent Classification (IPC) or to both national classification and IPC

| B. | FIELDS SEARCHED |
| --- | --- |

Minimum documentation searched (classification system followed by classification symbols)

H01M 10/54(2006.01); C22B 26/12(2006.01); H01M 4/13(2010.01); H01M 4/131(2010.01); H01M 4/505(2010.01); H01M 4/525(2010.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 양극 (cathode), 활물질 (active material), 재생 (recycling), 세척 (washing), 여과 (filtration)

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| X | KR 10-2021-0145455 A (LG ENERGY SOLUTION, LTD.) 02 December 2021 (2021-12-02)<br>See abstract; claims 1, 2, 3, 6, 8, 10 and 13-15; and paragraphs [0060]-[0064], [0068], [0071] and [0133]. | 1-12,14-16 |
| A | KR 10-2018-0087615 A (LG CHEM, LTD.) 02 August 2018 (2018-08-02)<br>See abstract; and claim 1. | 1-12,14-16 |
| A | KR 10-2021-0145454 A (LG ENERGY SOLUTION, LTD.) 02 December 2021 (2021-12-02)<br>See abstract; claim 1; and figure 2. | 1-12,14-16 |
| A | KR 10-1392616 B1 (ENERGY MATERIAL TECHNOLOGY CO., LTD.) 07 May 2014 (2014-05-07)<br>See entire document. | 1-12,14-16 |
| A | KR 10-2022-0134387 A (COSMOCHEMICAL CO., LTD.) 05 October 2022 (2022-10-05)<br>See entire document. | 1-12,14-16 |

☐ Further documents are listed in the continuation of Box C.　　☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **26 February 2024** | **27 February 2024** |

| Name and mailing address of the ISA/KR | Authorized officer |
| --- | --- |
| **Korean Intellectual Property Office**<br>**Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**

International application No.

**PCT/KR2023/018746**

| Box No. II | Observations where certain claims were found unsearchable (Continuation of item 2 of first sheet) |
|---|---|

This international search report has not been established in respect of certain claims under Article 17(2)(a) for the following reasons:

1. ☐ Claims Nos.:
because they relate to subject matter not required to be searched by this Authority, namely:

2. ☐ Claims Nos.:
because they relate to parts of the international application that do not comply with the prescribed requirements to such an extent that no meaningful international search can be carried out, specifically:

3. ☑ Claims Nos.: **13**
because they are dependent claims and are not drafted in accordance with the second and third sentences of Rule 6.4(a).

Form PCT/ISA/210 (continuation of first sheet) (July 2022)

**INTERNATIONAL SEARCH REPORT**
**Information on patent family members**

International application No.

**PCT/KR2023/018746**

| Patent document cited in search report | | | Publication date (day/month/year) | Patent family member(s) | | | Publication date (day/month/year) |
|---|---|---|---|---|---|---|---|
| KR | 10-2021-0145455 | A | 02 December 2021 | CN | 115136385 | A | 30 September 2022 |
| | | | | EP | 4099476 | A1 | 07 December 2022 |
| | | | | JP | 2023-512620 | A | 28 March 2023 |
| | | | | JP | 7357801 | B2 | 06 October 2023 |
| | | | | US | 2023-0082541 | A1 | 16 March 2023 |
| | | | | WO | 2021-241835 | A1 | 02 December 2021 |
| KR | 10-2018-0087615 | A | 02 August 2018 | CN | 108448193 | A | 24 August 2018 |
| | | | | CN | 108448193 | B | 02 April 2021 |
| | | | | CN | 113140821 | A | 20 July 2021 |
| | | | | KR | 10-1992715 | B1 | 25 June 2019 |
| | | | | US | 11031632 | B2 | 08 June 2021 |
| | | | | US | 2018-0212282 | A1 | 26 July 2018 |
| KR | 10-2021-0145454 | A | 02 December 2021 | CN | 114514647 | A | 17 May 2022 |
| | | | | EP | 4030534 | A1 | 20 July 2022 |
| | | | | JP | 2022-545753 | A | 28 October 2022 |
| | | | | JP | 7278475 | B2 | 19 May 2023 |
| | | | | US | 2022-0336878 | A1 | 20 October 2022 |
| | | | | WO | 2021-241817 | A1 | 02 December 2021 |
| KR | 10-1392616 | B1 | 07 May 2014 | None | | | |
| KR | 10-2022-0134387 | A | 05 October 2022 | None | | | |

Form PCT/ISA/210 (patent family annex) (July 2022)

**EP 4 503 263 A1**

REFERENCES CITED IN THE DESCRIPTION

**Patent documents cited in the description**

- KR 1020220158164